# EUROPÄISCHE PATENTSCHRIFT

(11) **EP 0 693 464 B1**
(45) Veröffentlichungstag und Bekanntmachung des Hinweises auf die Patenterteilung: **17.06.1998**
(21) Anmeldenummer: 95104343.9
(22) Anmeldetag: 24.03.1995
(51) Int. Cl.: C03C 17/34

(54) **Mit keramischen Farben dekorierter Glaskeramikartikel und Verfahren zu seiner Herstellung**
Glass ceramic articles decorated with ceramic colours and process for making these articles
Articles en vitrocéramique revêtus d'une composition colorante céramique et procédé de fabrication

(30) Priorität: 23.07.1994 DE 4426234
(43) Veröffentlichungstag der Anmeldung: 24.01.1996
(73) Patentinhaber: Schott Glas, 55122 Mainz (DE); CARL-ZEISS-STIFTUNG trading as SCHOTT GLASWERKE, 55122 Mainz (DE)
(72) Erfinder: Schönig, Dieter, D-55118 Mainz (DE); Wennemann, Dieter, D-55234 Albig (DE); Weinberg, Waldemar, Dr., D-55444 Seibersbach (DE); de Witzmann, Monica Cotlear, D-55268 Nieder-Olm (DE)

(56) Entgegenhaltungen:
- EP-A- 0 195 239
- EP-A- 0 490 491
- EP-A- 0 565 881
- CHEMICAL ABSTRACTS, vol. 116, no. 10, 9.März 1992 Columbus, Ohio, US; abstract no. 89797z, Seite 395; & JP-A-03 247 539 (CENTRAL GLASS CO. LTD.) 5.November 1991

## Beschreibung

Gegenstand der Erfindung ist ein mit keramischen Farben dekorierter Glaskeramikartikel und ein Verfahren zu seiner Herstellung.

Glaskeramikartikel finden vielfache Verwendung, z. B. als temperaturwechselfestes (feuerfestes) Küchengeschirr, und insbesondere auch als Kochflächen für Küchenherde.
Diese Artikel sind im allgemeinen mit Dekoren versehen, sei es aus rein ästhetischen Gründen oder um z. B. bei Kochflächen die Kochstellen zu markieren.
Als Farben für diese Dekore werden keramische Farben auf Emaillebasis verwendet, die nach konventionellen Techniken, wie z. B. Siebdruck oder mittels der Abziehbildtechnik, aufgebracht und anschließend eingebrannt werden.
Solche Maßnahmen und Glaszusammensetzungen zum Dekorieren, Verzieren und Glasieren von Glaskeramiken sind z. B. aus der DE 42 01 286 A1, der DE 36 00 109 C2, der DE 35 05 922 C1 und der DE 34 33 880 C2 bekannt.
Glaskeramik wird bekanntlich aus einem keramisierbaren Glas einer Zusammensetzung, wie sie beispielsweise aus der EP 0 220 333 B1 bekannt ist, durch eine Wärmebehandlung nach einem bestimmten Temperatur-Zeit-Programm (Keramisierung) erzeugt, wobei Temperaturen bis zu 1000 °C erreicht werden können.

Auch Kochflächen für Kochmulden, z. B. aus Glaskeramik oder Spezialglas werden an ihrer Oberseite mit einem Dekor aus keramischen Farben versehen. Einerseits dient dieses Dekor der Kochzonenmarkierung und damit der Unterscheidung zwischen Kalt- und Heißbereichen der Kochfläche, andererseits erfüllt die Dekoration der Kochfläche auch eine ästhetische Funktion und ermöglicht den Geräteherstellern durch das Anbringen von individuellen Designmerkmalen den Aufbau von eigenständigen, unterscheidungsfähigen Produktlinien.

Derzeit sind 3 Varianten der Dekoration von Glaskeramik-Kochflächen mittels Siebdruck möglich und auf dem Markt erhältlich:
1. Einfarbige, monochrome Dekoration mit geeigneten keramischen Farbe im Heiß- und Kaltbereich unter Verwendung von Dekorstrukturen verschiedenster Flächen- bzw. Belegungsgrade.
2. Einfarbige/mehrfarbige Dekoration mit geeigneten keramischen Farben nur zur funktionellen Markierung der Kochfläche, insbesondere der Kochzonenbegrenzung, aber z. B. auch der Restwärmeanzeige oder des Firmenlogos, wobei die Glaskeramik-Oberfläche sowohl im Heißbereich als auch im Kaltbereich größtenteils undekoriert bleibt.
3. Mehrfarbige Dekoration mit geeigneten keramischen Dekorfarben, wobei beim Druck zwischen den verschiedenen Farben ein Abstand eingehalten werden muß, um zu verhindern, daß Überlappungen und Überschneidungen der Dekore zustande kommen, die dann, nach bisheriger Ansicht im praktischen Gebrauch zum Abplatzen der Dekorschicht führen.

Bei allen Kochflächen mit diesen Dekorvarianten werden in Bereichen mit spärlicher Dekoration häufig Gebrauchsspuren und Fingerabdrücke bemängelt, welche auf der weitgehend glatten, glänzenden Oberfläche, insbesondere auch in Ausstellungs- und Verkaufsräumen sehr auffällig sind.

Bei Glaskeramik-Kochflächen mit einer nur spärlichen Dekoration, d.h. z.B. nur mit einer Kochzonenmarkierung, Restwärmeanzeige und einem Firmenlogo kann in Einzelfällen, insbesondere auch bei Einsatz von Halogenheizkörpern sowie bei starker Bestrahlung von oben, wie sie z. B. in Ausstellungsräumen von Küchenstudios üblich ist, unter Umständen die "Technik unter der Kochfläche" für den Betrachter bzw. den Benutzer sichtbar werden, und dessen ästhetisches Empfinden stören.

Um diesen unerwünschten Effekt zu vermeiden oder zu reduzieren, müssen heute Streulichtabdeckungen aufgebracht werden. Hierbei handelt es sich um eine dunkle Farbschicht, die auf die Kochflächenunterseite aufgebracht wird und die keine Durchsicht mehr erlaubt. Auch dieses Problem kann nach der vorliegenden Erfindung durch eine Grunddekoration weitgehend gelöst werden und somit die aufwendige Unterseitenbeschichtung überflüssig machen.

Darüber hinaus kommt es bei längerer Verwendung einer Kochfläche zu Gebrauchsspuren in Form von Kratzern, zu Metallabrieb von den Töpfen und zuweilen zu Oberflächenveränderungen durch ungeeignete Reinigungsmittel, die auf den Kochflächen auffällig und störend wirken.

Aus Chemical Abstracts, vol. 116, no. 10, 09. März 92, Columbus, Ohio, US, abstract no. 89797 z Seite 395, sind dekorative, mittels Interferenz-Effekten gefärbte Glas- und Glaskeramikplatten mit mehreren, verschiedenen Sol-Gel Coating-Schichten auf Basis von Oxiden abzuleiten, deren Brechungsindex n größer als der Brechungsindex der Substrat-Platte ist, wobei eine Schicht die Oberfläche des gesamten Substrates vollständig bedeckt und die anderen Schicht(en) die jeweilige Oberfläche nur mit den jeweils benötigten Strukturen bedecken.

Diese dekorativen Platten werden dabei durch Coaten mit einer Schicht eines Metall-Alkoxid-Sols auf die transparente Substrat-Platte hergestellt. Anschließend wird das Sol zum Gel hydrolysiert, die nicht benötigten Bereiche des Gel-Films mit einer Gelabbauenden viskosen Flüssigkeit bedeckt, auf niedrige Temperaturen aufgeheizt und die nicht benötigten Bereiche abgewaschen um eine erste Struktur auszubilden. Zusätzliche, weitere Strukturen werden dabei nach der gleichen Methode ausgebildet.

Inhalt sind Sol-Gel-Filme, die in mehreren Lagen auf das Substrat aufgebracht werden, wobei auch sehr aufwendige Wasch- und/oder Ätz-Prozesse eingesetzt werden, um bestimmte Muster und Strukturen zu erzeugen.

Die europäische Patentanmeldung EP 0 565 881 A1 offenbart ein aufwendiges Verfahren Glaskeramiken und Gläser zu dekorieren.
Es werden keine handelsüblichen keramischen Farben mit verschiedenen Zusammensetzungen verwendet, die überlappend angeordnet sind, sondern eigens zubereitete Zusammensetzungen.

Es werden hier nicht wirklich verschiedene Farbschichten aufgebracht, sondern Farbschichten, die durch eine "Vermischungsreaktion" bei deckungsgleichem Übereinanderdrucken bestimmte Dekoreffekte bewirken. Die Farb- oder Dekorschichten sind am fertigen Produkt etwa 0,05 - 0,13 mm (> 50 µm) dick. Dies entspricht in jedem Fall mehr als der 10-fachen Dicke einer üblichen Dekorschicht auf Glaskeramik (< 5 µm).

Ein derart dickes Dekor kann niemals auf Gegenständen wie Kochflächen, die hohen und ständigen Temperaturwechseln ausgesetzt sind aufgebracht werden, da das Dekor von Substrat durch unterschiedliche Wärmedehnungen abplatzen würde.

Des weiteren würde diese Dekorschicht bei einer Kochfläche als wärmedämmende Sperrschicht den Wärmeübergang erheblich verschlechtern oder zumindest verzögern.

Der Erfindung liegt daher die Aufgabe zugrunde, eine dekorierte Kochfläche so zu verbessern, daß die Auffälligkeit von Fingerabdrücken, eventuellen Gebrauchsspuren und Kratzern deutlich verringert wird, wobei durch das Dekor auch ein wirksamer Schutz der Glaskeramik vor Oberflächenbeschädigung erreicht wird. Zusätzlich soll eine Unterseitenbeschichtung zur Streulichtabdeckung überflüssig gemacht werden.

Die Aufgabe der Erfindung wird dadurch gelöst, daß auf dem Glaskeramikartikel über einer ersten Farblage mindestens eine weitere angeordnet ist, die die erste Farblage zumindest teilweise überlappt und wobei die erste Farblage als Grunddekor 1 bis 95 % der Oberfläche des Glaskeramikartikels bedeckt. Die erste Farblage als Grunddekor überzieht den Artikel gleichmäßig, als fein verteiltes Punkt- und/oder Linienraster und/ oder in sich wiederholenden graphischen Struktureinheiten.

Die erste Farblage als Grunddekor kann dabei die gesamte Kochfläche (Kalt- und Heißbereiche) überziehen und bedeckt die Oberfläche des Glaskeramikartikels von 1 % bis zu 95 %, im Heißbereich insbesondere von 1 % bis zu 40 %.
Damit derzeit schon vorgegebene Dekorationsvarianten und/oder Designlinien beibehalten werden können und gleichzeitig die Vorteile dieser Erfindung zur Geltung kommen, empfiehlt es sich, die Farben der ersten Lage bei Verwendung als Grunddekor mit dem Farbeindruck des undekorierten Glaskeramikartikels abzustimmen. D. h. es ist vorteilhaft z. B. für Kochflächen aus dunkler Glaskeramik die erste Farblage mit einer dunklen Dekorfarbe vorzunehmen.
Aufgrund der auf der Oberfläche gleichmäßig fein verteilten Dekoreinheiten und der unterschiedlichen Lichtreflektion zwischen undekorierter Oberfläche und Dekor erscheint die ursprünglich glatte und glänzende Kochfläche nun teilweise mattiert.
Dadurch ist die Auffälligkeit von hinzukommenden Mattierungen, wie z. B. Fingerabdrücken, Topfkratzern und sonstigen Gebrauchsspuren, sehr gering.

Eine weitere Ausführungsform dieser Erfindung besteht darin, die Kochzonen durch eine Auflockerung schon des Grunddekors deutlich optisch hervorzuheben. Die erste Farblage weist durch eine sich ändernde Auftragsdichte und/oder -dicke auf der Oberfläche des Glaskeramikartikels einen Intensitätsverlauf auf. Durch diesen Intensitätsverlauf der Dekorierung können Kochzonen markiert werden, ohne speziell Ringe oder andere Liniendekors aufdrucken zu müssen.

In bevorzugter Ausführungsform der Erfindung definiert die weitere Farblage als Markierungsdekor insbesondere Kochzonen, Warmhaltezonen, Kalt-bzw. Arbeitsbereiche, Anzeigenbereiche und Restwärmeanzeigen und bildet Schriftzüge und/oder Symbole und/oder sonstige Kennzeichnungen aus.
Bei Verwendung der weiteren Farblage als Markierungsdekor weist diese sinnvollerweise eine andere Farbe auf als das Grunddekor, wobei die Dekore insbesondere in Teilbereichen der Oberfläche des Glaskeramikartikels übereinander angeordnet sind.

Dabei ist es nach vorliegender Erfindung neu, daß die Dekore auch übereinander gedruckt werden können, ohne daß sich Probleme im Bereich der Überdruckung z. B. durch Verlaufen, Abplatzungen oder reduzierte Haft- und Abriebfestigkeit ergeben würden. Welche für Kochflächen geeigneten keramischen Dekorfarben dabei für die jeweiligen Farblagen untereinander und mit dem jeweiligen Glaskeramik-Substrat die optimalen Ergebnisse bei meist vorgegebenen Produktionsparametern für den jeweiligen späteren Einsatz erzielen, kann in anwendungstechnischen Vorversuchen ermittelt werden.

Die Erfindung betrifft auch das Verfahren zur Herstellung eines mit keramischen Farben dekorierten Glaskeramikartikels, bei dem ein Artikel aus keramisierbarem Glas mit den keramischen Farben dekoriert wird und das Einbrennen der keramischen Farben während oder nach der Keramisierung erfolgt, wobei auf die Oberfläche des Glaskeramikartikels eine erste Lage aus keramischer Farbe aufgebracht und getrocknet wird und danach eine weitere Lage aus keramischer Farbe über der ersten angeordnet wird, die die erste Farblage zumindest teilweise überlappt. Die Farblagen werden dabei im Siebdruckverfahren auf den Glaskeramikartikel aufgebracht.

Die Erfindung wird anhand der, in den jeweiligen Figuren dargestellten und nachstehend näher beschriebenen Ausführungsbeispiele erläutert.

Es zeigen:
- Figur 1a:: Aufsicht auf eine Kochfläche mit einer ersten Farblage als Grunddekor.
- Figur 1b:: Aufsicht auf eine Kochfläche mit einem Grunddekor nach Figur 1a und einer weiteren Farblage als Markierungsdekor.
- Figur 2a:: Aufsicht auf eine Kochfläche mit einer ersten Farblage als Grunddekor, die aber gleichzeitig auch Funktionsbereiche definiert.
- Figur 2b:: Aufsicht auf die Kochfläche nach Figur 2a nach dem 2. Siebdruck, wobei die zweite Farblage als Markierungsdekor ausgebildet ist.
- Figur 3:: Ein typisches Rastermuster für das Grunddekor

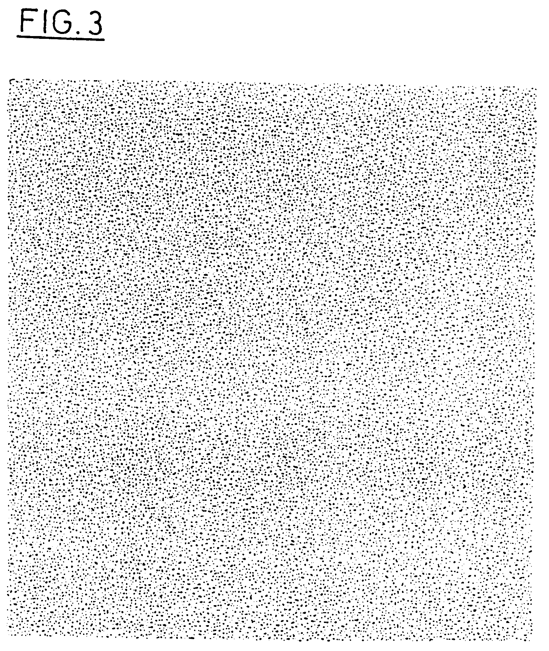

Figur 1a zeigt eine Kochfläche mit elektrischer Beheizung. Hierbei ist eine mit 1 bezeichnete Platte aus üblichem keramisierbaren Glas durch einen ersten Siebdruck mit einer ersten Farblage als Grunddekor 2, z. B. mit einem feinen Rastermuster (Fig. 3), versehen. Da die nach der Keramisierung gebildete Glaskeramik in Aufsicht schwarz und in der Durchsicht violett oder braun bis dunkelrot erscheint, wird eine sich schwarzbraun ausbildende Dekorfarbe eingesetzt, um den vom Gerätehersteller gewünschten Design-Eindruck der undekorierten Glaskeramik, so wie sie von den Kunden bisher akzeptiert wurde, nicht zu verfälschen.

Danach wird die mit der im Siebdruck-Verfahren aufgebrachten ersten Farblage dekorierte Glasplatte an der Luft oder z. B. bei 85 °C etwa 3 min lang getrocknet.

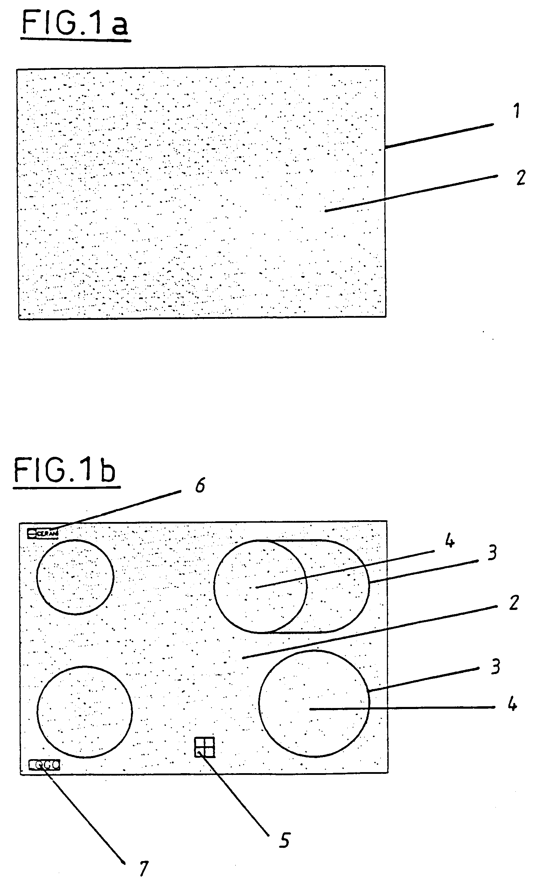

Anschließend wird zusätzlich zum Grunddekor 2 wieder mittels Siebdruck eine weitere zweite Farblage 3 als Markierungsdekor 3 übergeordnet, die, wie in Figur 1 b gezeigt, die Kochzonen 4 und Restwärmeanzeigen 5 definiert und Schriftzüge,wie ein Warenzeichen 6 oder ein Firmenlogo 7, ausbildet. Als Farbtöne werden für das Markierungsdekor 3 z. B. braun oder grüngrau gewählt, die sich deutlich vom Grunddekor 2 abheben.

Dabei wird nach der Erfindung das Markierungsdekor 3 einfach über das Grunddekor 2 gedruckt.

Danach erfolgt bei der so 2-fach mit Dekorfarbe bedruckten Platte der übliche Dekoreinbrand gleichzeitig mit der Keramisierung der Platte.

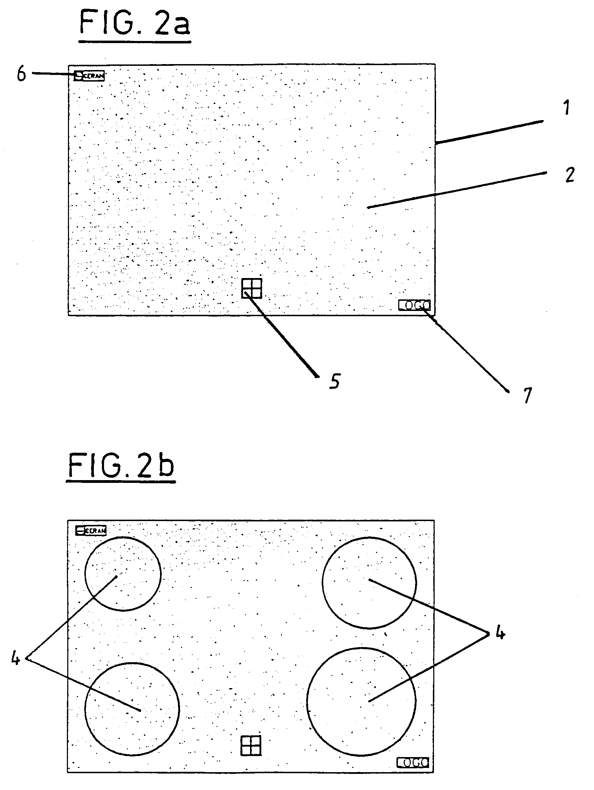

Figuren 2a und 2b veranschaulichen, wie mit 2 Siebdruckvorgängen subjektiv ein 3-Farben Dekor erreicht werden kann. Wie in Figur 2a zu sehen, wird beim ersten Druck die Kochfläche 1 aus einem üblichen keramisierbaren Glas mit einer relativ dunklen, z.B. stahlblauen Dekorfarbe als Grunddekor 2 bedruckt, wobei in diesem Fall aber mit dem gleichen Sieb und gleicher Farbe noch eine Restwärmeanzeige 5, ein Warenzeichen 6 und ein Firmenlogo 7 aufgedruckt werden.

Das Hintergrunddekor 2 ist wiederum sehr feinstrukturiert ausgebildet, z. B. ebenfalls mit dem in Figur 3 gezeigten Dekorraster.

Nach dem ersten Siebdruck wird die dekorierten Kochfläche 1 an der Luft getrocknet oder bei 50 - 90 °C ca. 5 min getrocknet.

Auf der bereits dekorierten Kochfläche erfolgt nun ein 2. Siebdruck mit einer anderen Farbe, z. B. weiß, der nur die Kochzonen 4 markiert.

Anschließend erfolgt der Dekoreinbrand bei etwa 950 °C.

Nach der Keramisierung der so dekorierten Platte hat der Betrachter folgende Farbeindrücke:
- das Hintergrunddekor 2, das sehr feinstrukturiert auf der dunklen Glaskeramikplatte 1 aufsitzt, erscheint ebenfalls dunkel, fast schwarz,
- die kräftige und in durchgezogenen Linien aufgedruckten Funktionsbereiche, Schriftzüge und Markierungen heben sich stahlblau vom dunklen Hintergrund der Platte ab und
- die Kochzonenmarkierung 4 erscheint weiß.

Zusammenfassend sollen die Vorteile der Erfindung, mit der es erstmals möglich ist, mehrfarbig dekorierte Glaskeramikkochflächen herzustellen, deren Dekore sich zum Teil auch überdecken und überschneiden, nochmals zusammengestellt werden:
- Das gleichmäßig auf der Platte verteilte Grunddekor schützt die Glaskeramikkochfläche selbst vor oberflächlichen Kratzern, vor Metallabrieb und Gebrauchsspuren;
- Das Grunddekor reduziert darüberhinaus die Auffälligkeit von Verschmutzungen, z. B. von Fingerabdrücken;
- Die Kochflächenunterseiten müssen z. T. nicht mehr beschichtet werden, um die unterliegende "Technik" abzudecken;
- Das Mehrfarbendekor erleichtert die Bedienung z. B. des Kochgerätes durch verwechslungsfreie, farblich individualisierte Funktionsbereiche;
- Es sieht sehr ansprechend aus;
- Es ist einfach mit herkömmlichen Verfahren und keramischen Farben herzustellen.

## Patentansprüche

1. Mit keramischen Farben dekorierter Glaskeramikartikel, insbesondere Glaskeramikkochfläche,
**dadurch gekennzeichnet,**
daß auf dem Glaskeramikartikel über einer ersten Farblage, die als Grunddekor 1 bis 95 % der Glaskeramikoberfläche bedeckt, mindestens eine weitere Farblage angeordnet ist, die die erste Farblage zumindest teilweise überlappt.

2. Glaskeramikartikel nach Anspruch 1,
**dadurch gekennzeichnet,**
daß die erste Farblage als Grunddekor 5 bis 80 % der Oberfläche des Glaskeramikartikels bedeckt.

3. Glaskeramikartikel nach Anspruch 1 oder 2,
**dadurch gekennzeichnet,**
daß die erste Farblage als Grunddekor den Artikel als gleichmäßiges, fein verteiltes Punkt- und/oder Linienraster und/oder in sich wiederholenden graphischen Struktureinheiten überzieht.

4. Glaskeramikartikel nach den Ansprüchen 1 bis 3,
**dadurch gekennzeichnet,**
daß die Farbe des Grunddekors mit dem Farbeindruck des undekorierten Glaskeramikartikels annähernd übereinstimmt.

5. Glaskeramikartikel nach den Ansprüchen 1 bis 4,
**dadurch gekennzeichnet,**
daß die erste Farblage Intensitätsverläufe durch eine sich ändernde Auftragsdichte und/oder -dicke auf der Oberfläche des Glaskeramikartikels aufweist.

6. Glaskeramikartikel nach den Ansprüchen 1 bis 5,
**dadurch gekennzeichnet,**
daß die erste Farblage zusätzlich Funktionsbereiche auf der Oberfläche des Glaskeramikartikels definiert und/oder Schriftzüge und/oder Symbole und/oder sonstige Kennzeichnungen ausbildet.

7. Glaskeramikartikel nach den Ansprüchen 1 bis 6,
**dadurch gekennzeichnet,**
daß die weitere Farblage als Markierungsdekor, insbesondere Kochzonen, Warmhaltezonen, Kalt- oder Arbeitsbereiche, Anzeigenbereiche und Restwärmeanzeigen definiert und/oder Schriftzüge und/oder Symbole und/oder sonstige Kennzeichnungen ausbildet.

8. Glaskeramikartikel nach den Ansprüchen 1 bis 7,
**dadurch gekennzeichnet,**
daß die weitere Farblage bei Verwendung als Markierungsdekor eine andere Farbe als das Grunddekor aufweist.

9. Verfahren zur Herstellung eines mit keramischen Farben dekorierten Glaskeramikartikels nach einem der Ansprüche 1 bis 8, bei dem
auf eine Oberfläche aus keramisierbarem Glas im Siebdruck eine erste Lage aus keramischen Farben aufgebracht wird, die anschließend getrocknet wird,
dann mindestens eine weitere Lage aus keramischer Farbe über der ersten Farblage aufgebracht wird, wobei die weitere Farblage die erste mindestens teilweise überlappt, und
danach die keramischen Farben während der Keramisierung des Glases in die Glaskeramik bei Temperaturen bis zu 1000 °C eingebrannt werden.

## Claims

1. Glass-ceramic article, in particular a glass-ceramic cooking surface, decorated with ceramic colours, characterized in that on the glass-ceramic article there is arranged, over a first colour layer which as base decoration covers from 1 to 95% of the glass-ceramic surface, at least one further colour layer which at least partly overlaps the first colour layer.

2. Glass-ceramic article according to Claim 1, characterized in that the first colour layer as base decoration covers from 5 to 80% of the surface of the glass-ceramic article.

3. Glass-ceramic article according to Claim 1 or 2, characterized in that the first colour layer as base decoration covers the article as a uniform, finely divided grid of points and/or lines and/or in repeating graphic structural units.

4. Glass-ceramic article according to any of Claims 1 to 3, characterized in that the colour of the base decoration approximately matches the colour impression of the undecorated glass-ceramic article.

5. Glass-ceramic article according to any of Claims 1 to 4, characterized in that the first colour layer has intensity gradations as a result of changes in the density and/or thickness in which it is applied to the surface of the glass-ceramic article.

6. Glass-ceramic article according to any of Claims 1 to 5, characterized in that the first colour layer additionally defines functional regions on the surface of the glass-ceramic article and/or forms writing and/or symbols and/or other markings.

7. Glass-ceramic article according to any of Claims 1 to 6, characterized in that the further colour layer as marking decoration defines, in particular, cooking zones, keeping-warm zones, cold or working regions, display regions and residual heat indicators and/or forms writing and/or symbols and/or other markings.

8. Glass-ceramic article according to any of Claims 1 to 7, characterized in that the further colour layer when used as marking decoration has a different colour from the base decoration.

9. Process for producing a glass-ceramic article decorated with ceramic colours according to any of Claims 1 to 8, in which a first layer of ceramic colours is applied by screen printing to a surface made of ceramicizable glass and is subsequently dried, at least one further layer of ceramic colour is then applied over the first colour layer, with the further colour layer at least partly overlapping the first, and the ceramic colours are then fired onto the glass ceramic at temperatures up to 1000°C during the ceramicization of the glass.

## Revendications

1. Article en vitrocéramique décoré de couleurs céramiques, en particulier surface de cuisson en vitrocéramique, caractérisé en ce que, sur l'article en vitrocéramique, par-dessus une première couche de couleur, qui recouvre, en tant que décoration de fond, de 1 à 95 % de la surface en vitrocéramique, est disposée au moins une couche de couleur supplémentaire, qui recouvre au moins en partie la première couche de couleur.

2. Article en vitrocéramique selon la revendication 1, caractérisé en ce que la première couche de couleur recouvre, en tant que décoration de base, de 5 à 80 % de la surface de l'article en vitrocéramique.

3. Article en vitrocéramique selon la revendication 1 ou 2, caractérisé en ce que la première couche de couleur recouvre l'article en tant que décoration de base sous forme de quadrillage régulier, finement réparti de points et/ou de lignes, et/ou sous forme d'unités graphiques structurelles récurrentes.

4. Article en vitrocéramique selon les revendications 1 à 3, caractérisé en ce que la couleur de la décoration correspond approximativement à la perception de couleur de l'article en vitrocéramique non décoré.

5. Article en vitrocéramique selon les revendications 1 à 4, caractérisé en ce que la première couche de couleur présente des variations d'intensité grâce à une densité et/ou une épaisseur d'application variables sur la surface de l'article en vitrocéramique.

6. Article en vitrocéramique selon les revendications 1 à 5, caractérisé en ce que la première couche de couleur définit en plus des domaines fonctionnels sur la surface de l'article en vitrocéramique et/ou constitue des inscriptions et/ou des symboles et/ou des marquages quelconques.

7. Article en vitrocéramique selon les revendications 1 à 6, caractérisé en ce que la couche de couleur supplémentaire définit, en tant que décoration de marquage, en particulier des zones de cuisson, des zones de maintien au chaud, des domaines froids ou de travail, des domaines d'indication et des domaines de chaleur résiduelle et/ou constitue des inscriptions et/ou des symboles et/ou des marquages quelconques.

8. Article en vitrocéramique selon les revendications 1 à 7, caractérisé en ce que la couche de couleur supplémentaire présente, lors de l'utilisation en tant que décoration de marquage, une autre couleur que celle de la décoration de base.

9. Procédé de fabrication d'un article en vitrocéramique décoré de couleurs céramiques selon l'une quelconque des revendications 1 à 8, lors duquel une première couche de couleurs céramiques est appliquée par sérigraphie sur une surface en verre céramisable, laquelle couche est ensuite séchée, au moins une couche supplémentaire en couleur céramique est alors appliquée sur la première couche de couleur, la couche de couleur supplémentaire recouvrant au moins partiellement la première, et dans lequel les couleurs céramiques sont ensuite fixées par cuisson pendant la céramisation dans la vitrocéramique à des températures allant jusqu'à 1000°C.
